# EUROPÄISCHE PATENTSCHRIFT

(11) **EP 2 840 451 B1**
(45) Veröffentlichungstag und Bekanntmachung des Hinweises auf die Patenterteilung: **19.01.2022**
(21) Anmeldenummer: 14002101.5
(22) Anmeldetag: 18.06.2014
(51) Int. Cl.: G05B 19/042, B63J 3/02, B63H 21/17, B63H 21/21

(54) **Energieversorgungs- und Betriebsanlage für Schiffe und Offshore-Einheiten**
Power supply and operating system for ships and offshore units
Installation d'alimentation en énergie et de fonctionnement pour des bateaux et des unités offshore

(30) Priorität: 21.06.2013 DE 102013010370
(43) Veröffentlichungstag der Anmeldung: 25.02.2015
(73) Patentinhaber: Andersen, Peter, 21075 Hamburg (DE)
(72) Erfinder: Peter Andersen, 21075 Hamburg (DE); Michael Krahe, 21073 Hamburg (DE)
(74) Vertreter: Lelgemann, Karl-Heinz

(56) Entgegenhaltungen:
- WO-A1-2008/099646
- JP-A- 2011 214 560
- CELIC JASMIN ET AL: "e-Maintenance for ship electrical propulsion plants", 2013 36TH INTERNATIONAL CONVENTION ON INFORMATION AND COMMUNICATION TECHNOLOGY, ELECTRONICS AND MICROELECTRONICS (MIPRO), MIPRO, 20. Mai 2013 (2013-05-20), Seiten 1202-1205, XP032482790, [gefunden am 2013-09-11]
- LOGAN K P: "Operational experience with intelligent software agents for shipboard diesel and gas turbine engine health monitoring", ELECTRIC SHIP TECHNOLOGIES SYMPOSIUM, 2005 IEEE PHILADELPHIA, PA, USA JULY 25-27, 2005, PISCATAWAY, NJ, USA,IEEE, 25. Juli 2005 (2005-07-25), Seiten 184-194, XP010846637, ISBN: 978-0-7803-9259-5
- LIJIAN OU ET AL: "Ship Propulsion Fault Diagnosis System Design Based on Remote Network", MEASURING TECHNOLOGY AND MECHATRONICS AUTOMATION (ICMTMA), 2013 FIFTH INTERNATIONAL CONFERENCE ON, IEEE, 16. Januar 2013 (2013-01-16), Seiten 993-995, XP032354031, DOI: 10.1109/ICMTMA.2013.247 ISBN: 978-1-4673-5652-7

## Beschreibung

Die Erfindung bezieht sich auf eine Energieversorgungs- und Betriebsanlage für Schiffe und Offshore-Einheiten nach dem Oberbegriff des Patentanspruchs 1.

Bei derartig ausgebildeten und ausgerüsteten Energieversorgungs- und Betriebsanlagen für Schiffe wird das Auftreten einer Störung, Irregularität od.dgl. üblicherweise seitens der Schiffsmannschaft bemerkt, woraufhin dann seitens der Schiffsmannschaft das betreffende Ereignis üblicherweise an den Schiffseigner oder Reeder weitergemeldet wird, der seinerseits ggf. zuständiges Personal der Werft oder des Schiffsausrüsters informiert. Sofern das gemeldete Ereignis eine bestimmte Qualität aufweist, läuft das Schiff den nächstgelegenen geeigneten Hafen an, zu dem ein Fachmann entsendet wird, der dann eine Inaugenscheinnahme des aufgetretenen Schadens bzw. des aufgetretenen Ereignisses vornimmt. Hierzu untersucht der Fachmann sämtliche in das Ereignis einbezogenen Komponenten und Aggregate der Energieversorgungs- und Betriebsanlage. Dies beinhaltet u.U. intensive Prüfungsmaßnahmen, wobei darüber hinaus ein Stillsetzen der Energieversorgungs- und Betriebsanlage und damit ein Betriebsausfall einhergehen kann. Nach Analyse des Problems bzw. des Ereignisses werden die geeigneten Maßnahmen zur Reparatur oder ggf. die erforderlichen Wartungsmaßnahmen eingeleitet.

Eine derartige Energieversorgungs- und Betriebsanlage für Schiffe und Offshore-Einheiten ist etwa aus LOGAN K P, ELECTRIC SHIP TECHNOLOGIES SYMPOSIUM, 2005 IEEE PHILADEL-PHIA, USA, 25.07.2005, Seiten 184-194, XP010846637, ISBN: 978-0-7803-9259-5 bekannt.

Aus CELIC J ET AL, 36TH INTERNATIONAL CONVENTION ON INFORMATION AND COMMUNICATION TECHNOLOGY, ELECTRONICS AND MICRO-ELECTRONICS (MIPRO), MIPRO, 20.05.2013, Seiten 1202-1205, XP032482790 sowie aus LIJIAN OU ET AL, 5TH INTERNATIONAL CONF. ON MEASURING TECHNOLOGY AND MECHATRONICS AUTOMATION (ICMTMA), 16.01.2013, Seiten 993-995, XP032354031, DOI: 10.1109/ICMTMA. 2013.247 ISBN: 978-1-4673-5652-7 sind in allgemeiner Form Verfahren zum Betrieb einer elektrischen Schiffsantriebsanlage bekannt, wobei der Schwerpunkt der bekannten Verfahren auf der Pflege, der Wartung und der Instandhaltung der betreffenden elektrischen Schiffsantriebsanlagen liegt. Brennkraftmaschinen werden explizit nicht erwähnt. Die bekannten elektrischen Schiffsantriebsanlagen haben eine Steuervorrichtung, in der Steuerbefehle generiert und Parameter der zu steuernden Aggregate erfasst werden.

Ausgehend von dem vorstehend geschilderten Stand der Technik liegt der Erfindung die Aufgabe zugrunde, die gattungsgemäße Energieversorgungs- und Betriebsanlage für Schiffe derart weiterzubilden, daß der Aufwand für Wartung und/oder Reparatur erheblich reduziert, etwaige Betriebsausfälle minimiert und der wirtschaftliche Aufwand für den Betrieb der Energieversorgungs- und Betriebsanlage reduziert werden können.

Diese Aufgabe wird erfindungsgemäß durch eine Energieversorgungs- und Betriebsanlage für Schiffe und Offshore-Einheiten gelöst, die neben den Merkmalen des Oberbegriffs des Patentanspruchs 1 auch die Merkmale des kennzeichnenden Teils des Patentanspruchs 1 aufweist. Erfindungsgemäß wird die Möglichkeit geschaffen, daß in einer in quasi beliebiger Entfernung zum Schiff bzw. zur Offshore-Einheit vorhandenen Zentrale Fachleute und Experten Zugriff auf sämtliche Daten nehmen können, die im Zusammenhang mit dem Betrieb der Energieversorgungs- und Betriebsanlage des Schiffes bzw. der Offshore-Einheit anfallen und eine Rolle spielen. Insbesondere ist es möglich, diejenigen Betriebsdaten und Steuersignale in der Zentrale einzusehen, die in einen Zeitraum fallen, in dem eine Störung oder eine Irregularität des Betriebs der Energieversorgungs- und Betriebsanlage aufgetreten ist. Bereits in der Zentrale können dann geeignete Maßnahmen eingeleitet werden, um die Störung bzw. die Irregularität zu beseitigen. Dies kann ggf. durch entsprechende Anweisungen an die Schiffsmannschaft geschehen, wobei Auswirkungen der durch die Schiffsmannschaft vorgenommenen Maßnahmen auf den Betrieb der Energieversorgungs- und Betriebsanlage in der Zentrale überprüft werden können. Hierdurch kann der Aufwand für Wartungs- und Reparaturarbeiten erheblich reduziert werden. Mittels der der Diagnoseeinheit zugeordneten Auswerteeinheit, die in Abhängigkeit von den in der Steuervorrichtung erfaßten Betriebsdaten und Steuersignalen arbeitet, ist es möglich, den Betrieb der zumindest einen Brennkraftmaschine so zu optimieren, daß der Treibstoffverbrauch für die Fortbewegung des Schiffes von einem Punkt zum anderen minimiert wird. Hierbei kann aufgrund der Fernzugriffsfähigkeit der Diagnoseeinheit auf Erfahrungen anderer Schiffe bei einer Bewegung zwischen den genannten Punkten zurückgegriffen werden.

Da der zumindest eine Schiffspropeller mittels der Steuervorrichtung verstellbare Propellerflügel aufweist, kann der Betrieb des jeweiligen Schiffspropellers sowohl unter entsprechender Einstellung der Drehzahl als auch unter entsprechender Einstellung der Propellerflügel optimiert werden.

Weitere Teile oder der Schiffsbetrieb insgesamt lassen sich optimieren, wenn mittels der Auswerteeinheit unter Berücksichtigung der erfaßten Betriebsdaten und Steuersignale und eines aktuellen Anforderungsprofils an jeden elektrischen Generator und/oder jeden Elektromotor und/oder jeden Verbrennungsmotor und/oder die eingangsseitigen Aggregate des Schiffsnetzes und/oder jede Energieverteilereinheit ein optimierter Betriebsablauf für jeden elektrischen Generator und/ oder jeden Elektromotor und/oder jeden Verbrennungsmotor und/ oder die eingangsseitigen Aggregate des Schiffsnetzes und/ oder jede Energieverteilereinheit errechenbar ist.

Bei Schiffen, die neben den üblichen Betriebsanlagen weitere vergleichsweise große Verbraucher haben, z.B. bei Passagier- und Kreuzfahrtschiffen, insbesondere Flußkreuzfahrtschiffen, ist es zweckmäßig, wenn die dort vorgesehenen weiteren Verbraucheraggregate, z.B. Klimaaggregate, Abwasseraggregate, die an das Schiffsnetz angeschlossen und mittels des Schiffsnetzes mit elektrischer Energie versorgbar sind, hinsichtlich ihrer Betriebsdaten ebenfalls mittels der Steuervorrichtung erfaßbar und mittels der Steuervorrichtung steuerbar sind, wobei deren erfaßte Betriebsdaten und Steuersignale bei der Errechnung eines optimierten Betriebsablaufs für jede Brennkraftmaschine und/oder jeden elektrischen Generator und/oder jeden Elektromotor und/oder jeden Verbrennungsmotor und/oder jeden Schiffspropeller und/oder die eingangsseitigen Aggregate des Schiffsnetzes und/oder jede Energieverteilereinheit berücksichtigbar ist.

Vorteilhaft sind mittels der der Diagnoseeinheit zugeordneten Auswerteeinheit unter Berücksichtigung der erfaßten Betriebsdaten und Steuersignale und zumindest eines aktuellen Anforderungsprofils an jedes weitere Verbraucheraggregat optimierte Betriebsabläufe für jedes weitere Verbraucheraggregat errechenbar.

Vorteilhaft ist die Diagnoseeinheit der Energieversorgungs- und Betriebsanlage als Industriecomputer ausgebildet, der in die schiffsseitige Steuervorrichtung integriert ist, mittels dem die die Betriebsdaten und die Steuersignale erfassende und abspeichernde Software autonom betreibbar ist, der zum Empfang der Betriebsdaten und Steuersignale über eine Ethernet-Verbindung an die Steuervorrichtung angeschlossen ist, und mittels dem die Betriebsdaten und Steuersignale über das Internet mittels einer Website-basierten Schnittstelle und/ oder mittels einer direkten Datenbankverbindung fernzugriffsfähig sind. Grundsätzlich sind auch andere als Ethernet-Verbindungen zwischen der Steuervorrichtung einerseits und der Diagnoseeinheit andererseits möglich. Die Diagnoseeinheit kann auch selbständig Benachrichtigungen an zuständige Stellen bzw. Empfänger senden.

Um unerwünschte Eingriffe in den Betrieb der Energieversorgungs- und Betriebsanlage zu verunmöglichen, ist es vorteilhaft, wenn die Diagnoseeinheit steuervorrichtungsseitig als reine Empfangseinheit ausgebildet ist.

Um die in der Diagnoseeinheit bzw. in deren Auswerteeinheit gespeicherten und errechneten Daten zur wirtschaftlichen Optimierung des Betriebs der Energieversorgungs- und Betriebsanlage zu nutzen, ist es alternativ möglich, die Diagnoseeinheit steuereinheitsseitig sowohl als Empfangs- als auch als Ausgabeeinheit auszugestalten.

Gemäß einer besonders vorteilhaften Ausführungsform der erfindungsgemäßen Energieversorgungs- und Betriebsanlage ist die Diagnoseeinheit durch einen Industriecomputer, vorzugsweise einen SIMATIC IPC 427C Microbox-Computer der Firma Siemens ausgestaltet. Hierdurch kann der technisch-konstruktive und damit wirtschaftliche Aufwand für die Diagnoseeinheit vergleichsweise gering gehalten werden. Nichtsdestotrotz ist der Computer der genannten Bauart geeignet, sämtlichen an den Betrieb der Diagnoseeinheit gestellten Anforderungen zu genügen.

Im Falle der erfindungsgemäß vorgesehenen Diagnoseeinheit kann eine Abfrageanzahl je Zeiteinheit im aktuell gängigen Umfang, d.h. mit einer Frequenz von ca. 20 Hz, vorgesehen sein. Diese Frequenz kann aber nahezu beliebig gesteigert werden, z.B. bis in einen Bereich von 200 Hz.

Gemäß einer weiteren vorteilhaften Ausgestaltung der erfindungsgemäßen Energieversorgungs- und Betriebsanlage können in der Diagnoseeinheit weitere Parameter, z.B. Temperaturverläufe in Maschinen- und/oder Kühlräumen, Betriebszustände von Kühlwasseranlagen, die Geschwindigkeit und/oder die geographische Position des Schiffes bzw. der Offshore-Einheit od. dgl., abgespeichert werden. Diesbezüglich sei darauf hingewiesen, daß die Diagnoseeinheit kein integrierter Bestandteil der Energieversorgungs- und Betriebsanlage ist, sondern mit dieser zusammenwirkt.

Im Falle der erfindungsgemäßen Energieversorgungs- und Betriebsanlage können Energiekennzahlen, detaillierte Informationen zu aktuellen Betriebszuständen, Leistungen, Umgebungsbedingungen oder auch unvorhergesehene Störungen in Echtzeit aufgezeichnet, in einer Datenbank gespeichert und für definierte Fragestellungen oder auch zur Ermittlung und Identifizierung von betriebswirtschaftlichen Fragen, technischen Fehlerquellen und Störungsursachen zur Auswertung zur Verfügung gestellt werden. Langzeit-Trends in den Daten können beobachtet, Signale und Parameter ausgewertet und Daten zueinander in Beziehung gesetzt werden. Fehler sind identifizierbar, ohne daß diese Fehler identifizierende Personen dafür an Bord des Schiffes bzw. der Offshore-Einheit gehen müßten. Aufgrund der Verkürzung der Reaktionszeiten kann der technisch-konstruktive und wirtschaftliche Aufwand für den Betrieb der Energieversorgungs- und Betriebsanlage erheblich reduziert werden.

Sofern untereinander vergleichbare Schiffe bzw. Offshore-Einheiten eingesetzt werden, können Rückgriffe auf Daten vergleichbarer Schiffe oder Offshore-Einheiten genommen werden, um an anderen vergleichbaren Schiffen oder Offshore-Einheiten vergleichbare Unregelmäßigkeiten zu erkennen und diese zu beheben und um den Betrieb, z.B. hinsichtlich des Treibstoffverbrauchs, zu optimieren.

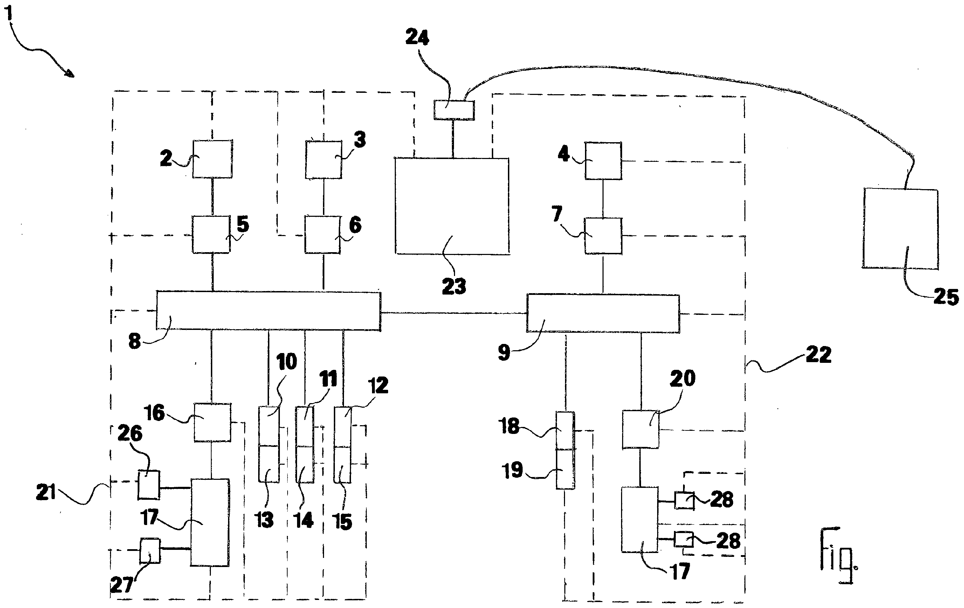

Im Folgenden wird die Erfindung anhand einer Ausführungsform unter Bezugnahme auf die Zeichnung näher erläutert, in deren einziger Figur eine Prinzipdarstellung einer erfindungsgemäßen Energieversorgungs- und Betriebsanlage für Schiffe gezeigt ist.

Die erfindungsgemäße Energieversorgungs- und Betriebsanlage 1 für Schiffe ist im in der einzigen Figur gezeigten Ausführungsbeispiel wie folgt aufgebaut:
Die Energieversorgungs- und Betriebsanlage 1 hat drei Brennkraftmaschinen 2, 3, 4, von denen die Brennkraftmaschinen 2 und 3 einer Heckgruppe und die Brennkraftmaschine 4 einer Buggruppe der Energieversorgungs- und Betriebsanlage 1 zugeordnet sind.

Bei den Brennkraftmaschinen 2, 3, 4 handelt es sich üblicherweise um Dieselmotoren oder Gasmotoren.

Jede Brennkraftmaschine 2, 3, 4 treibt einen ihr zugeordneten elektrischen Generator 5, 6 bzw. 7 an. Die beiden den Brennkraftmaschinen 2, 3 zugeordneten elektrischen Generatoren 5, 6 speisen elektrische Energie in eine heckseitige Energieverteilereinheit 8, der der Brennkraftmaschine 4 zugeordnete elektrische Generator 7 speist elektrische Energie in eine bugseitige Energieverteilereinheit 9 ein.

Bei den beiden Energieverteilereinheiten 8, 9 können jeweils Gleichspannungszwischenkreise mit bidirektional arbeitenden Stromrichtern vorgesehen sein.

Mittels der heckseitigen Energieverteilereinheit 8 werden im dargestellten Ausführungsbeispiel drei Elektromotoren 10, 11, 12 mit Antriebsenergie versorgt, die ihrerseits dem Antrieb dreier heckseitiger Schiffspropeller 13, 14, 15 dienen. Des weiteren wird mittels der heckseitigen Energieverteilereinheit 8 über einen Transformator 16 die Versorgung mit elektrischer Energie heckseitiger Bereiche eines Schiffsnetzes 17 bewerkstelligt. Im in der einzigen Figur dargestellten Ausführungsbeispiel sind an den heckseitigen Bereich des Schiffsnetzes 17 Klimaaggregate 26 und Abwasseraggregate 27 angeschlossen, die mittels des Schiffsnetzes 17 mit elektrischer Energie versorgt werden.

In entsprechender Weise werden über die bugseitige Energieverteilereinheit 9 ein Elektromotor 18, der seinerseits einen bugseitigen Schiffspropeller 19 antreibt, und über einen Transformator 20 ein bugseitiger Abschnitt des Schiffsnetzes 17 mit elektrischer Energie versorgt. An diesen bugseitigen Abschnitt des Schiffsnetzes 17 sind im dargestellten Ausführungsbeispiel weitere Verbraucheraggregate 28 angeschlossen, die über diesen Abschnitt des Schiffsnetzes 17 mit elektrischer Energie versorgbar sind.

Die Schiffspropeller 13, 14, 15, 19 weisen verstellbare Propellerflügel auf, deren Einstellung an das jeweilige Anforderungsprofil anpaßbar ist.

Sämtliche vorstehend aufgeführten Aggregate der Energieversorgungs- und Betriebsanlage 1 sowie ggf. weitere, hier im einzelnen nicht beschriebenen Aggregate derselben sind über in der Figur durch gestrichelte Linien lediglich angedeutete Steuer- und Signalleitungen 21, 22 an eine Steuervorrichtung 23, 24 der Energieversorgungs- und Betriebsanlage 1 angeschlossen.

In der Steuervorrichtung 23, 24 der Energieversorgungs- und Betriebsanlage 1 des Schiffes werden sämtliche Betriebszustände sämtlicher Aggregate der Energieversorgungs- und Betriebsanlage 1 erfaßt. Des weiteren werden mittels einer Steuereinheit 23 der Steuervorrichtung 23, 24 die genannten und ggf. weitere Aggregate der Energieversorgungs- und Betriebsanlage 1 über entsprechende Steuerbefehle gesteuert bzw. geregelt. Darüber hinaus können in der Steuervorrichtung 23, 24 weitere Parameter erfaßt und aufgezeichnet werden, z.B. Temperaturverläufe in Maschinen- und/oder Kühlräumen, Betriebszustände von Kühlwasseranlagen, die Geschwindigkeit und/oder die geographische Position des Schiffs etc. Des weiteren werden mittels der Steuereinheit 23 die genannten und ggf. weitere Aggregate der Energieversorgungs- und Betriebsanlage 1 über entsprechende Steuerbefehle gesteuert bzw. geregelt.

An die Steuereinheit 23 der Energieversorgungs- und Betriebsanlage 1 ist eine Diagnoseeinheit 24 der Steuervorrichtung 23, 24 angeschlossen. In der Steuervorrichtung 23, 24 werden sämtliche in der Steuervorrichtung 23, 24 erfaßten Betriebsdaten der Aggregate der Energieversorgungs- und Betriebsanlage 1 sowie darüber hinaus erfaßte Parameter an die Diagnoseeinheit 24 weitergeleitet. Dasselbe gilt für sämtliche seitens der Steuereinheit 23 an einzelne oder mehrere Aggregate der Energieversorgungs- und Betriebsanlage 1 ausgegebene Steuersignale. Die Betriebsdaten und ggf. weitere Parameter können alternativ auch unmittelbar in die Diagnoseeinheit 24 eingegeben werden.

In der Diagnoseeinheit 24 werden zum einen die jeweils aktuell an diese übermittelten Betriebsdaten, Parameter und Steuersignale erfaßt, wobei zum anderen sämtliche an die Diagnoseeinheit 24 weitergeleiteten Betriebsdaten, Parameter und Steuersignale in der Diagnoseeinheit 24 abgespeichert werden.

In der Diagnoseeinheit 24 stehen somit sämtliche den Betrieb der Energieversorgungs- und Betriebsanlage 1 betreffende sowie ggf. weitere Daten zur Verfügung.

In einer Ausführungsform der erfindungsgemäßen Energieversorgungs- und Betriebsanlage 1 ist die Diagnoseeinheit 24 als Industriecomputer der Bauart SIMATIC IPC 427C Microbox der Firma Siemens ausgebildet. Die derart gestaltete Diagnoseeinheit 24 ist so ausgebildet, daß auf sie bzw. auf die an sie übermittelten bzw. in ihr abgespeicherten Daten mittels einer Zentrale 25 zugegriffen werden kann. Dieser Zugriff kann über das Internet mittels einer Datenbankverbindung bewerkstelligt werden. Der Datenexport ist auch über USB oder andere Netzwerke realisierbar.

Ein Zugriff von der Zentrale 25 auf die Diagnoseeinheit 24 ist immer möglich, völlig unabhängig davon, wo sich das mit der Energieversorgungs- und Betriebsanlage 1 und mit der Diagnoseeinheit 24 ausgerüstete Schiff gerade befindet, sofern das Schiff mit dem Internet verbunden ist.

Das Zusammenwirken der Diagnoseeinheit 24 einerseits und der Zentrale andererseits kann beispielsweise so gestaltet werden, daß die Diagnoseeinheit 24 die Zentrale 25 immer dann durch Übermittlung eines entsprechenden Signals bzw. einer entsprechenden Nachricht informiert, wenn in der Diagnoseeinheit 24 Abnormalitäten oder Unregelmäßigkeiten in der Energieversorgungs- und Betriebsanlage 1 des Schiffes erfaßt werden.

Ein in der Zentrale 25 befindlicher Fachmann bzw. Experte kann dann damit beginnen, diejenigen Betriebsdaten, Parameter und Steuersignale herunterzuladen, die in denjenigen Zeitraum fallen, in den die mitgeteilte Unregelmäßigkeit bzw. Irregularität fällt. Hierdurch kann der Experte die Ursache der Irregularität schnell und verläßlich identifizieren.

Die erforderlichen Maßnahmen können dann getroffen und eingeleitet werden bzw. die Schiffsmannschaft bei der Beseitigung der Ursachen der Irregularität oder daraus bereits resultierter Schäden unterstützt werden.

Um eine unerwünschte Beeinflussung des Betriebs der Steuereinheit 23 oder daran angeschlossener Aggregate und Komponenten durch die Diagnoseeinheit 24 zu vermeiden, ist die Diagnoseeinheit 24 steuereinheitsseitig ausschließlich zum Empfang von Betriebsdaten, Parametern und Steuersignalen ausgebildet. Dem Anschluß der Diagnoseeinheit 24 an die Steuereinheit 23 dient eine entsprechend ausgestaltete industrielle Ethernet-Verbindung.

Im dargestellten Ausführungsbeispiel weist die Energieversorgungs- und Betriebsanlage 1 die heckseitige Energieverteilereinheit 8 und die bugseitige Energieverteilereinheit 9 auf. Die beiden Energieverteilereinheiten 8, 9 sind miteinander verbunden, so daß es möglich ist, sämtliche Verbraucher über jede der Energieverteilereinheiten 8, 9 mit elektrischer Energie zu versorgen.

Die Steuereinheit 23 kann ein heckseitiges Steuereinheitsglied und ein bugseitiges Steuereinheitsglied aufweisen, wobei diese selbstverständlich dann miteinander in Verbindung stehen. Die Diagnoseeinheit 24 ist dann bei Flußkreuzfahrtschiffen üblicherweise dem heckseitigen Steuereinheitsglied zugeordnet.

Die Diagnoseeinheit 24 kann darüber hinaus in die schiffsseitige Steuervorrichtung 23, 24 integriert sein. Wesentlich für den Betrieb der Diagnoseeinheit 24 ist, daß die in der Diagnoseeinheit 24 installierte Software geeignet ist, die Betriebsdaten der Energieversorgungs- und Betriebsanlage 1, damit zusammenhängende Parameter und die Steuersignale, die von der Steuereinheit 23 ausgegeben werden, zu erfassen und abzuspeichern, wobei das hierzu erforderliche Programm autonom betreibbar sein muss.

Bei einer in der Figur nicht dargestellten Ausführungsform können anstelle oder zusätzlich zu den Elektromotoren 10, 11, 12, 18 Verbrennungsmotoren, z.B. Dieselmotoren, vorgesehen sein.

## Patentansprüche

1. Energieversorgungs- und Betriebsanlage für Schiffe und Offshore-Einheiten,
mit zumindest einer Brennkraftmaschine (2, 3, 4),
zumindest einem elektrischen Generator (5, 6, 7), wobei jede Brennkraftmaschine (2, 3, 4) an einen elektrischen Generator (5, 6, 7) angeschlossen ist,
zumindest einem Elektromotor (10, 11, 12, 18),
der durch den zumindest einen elektrischen Generator (5, 6, 7) mit elektrischer Energie versorgbar ist,
und/oder zumindest einem Verbrennungsmotor,
wobei mittels dem zumindest einen Elektromotor (10, 11, 12, 18) und/oder dem zumindest einen Verbrennungsmotor zumindest ein Schiffspropeller (13, 14, 15, 19) antreibbar ist,
einem Schiffsnetz (17),
das mittels des zumindest einen elektrischen Generators (5, 6, 7) mit elektrischer Energie versorgbar ist,
zumindest einer Energieverteilereinheit (8, 9),
die zwischen dem zumindest einen elektrischen Generator (5, 6, 7) einerseits und ggf. dem zumindest einen Elektromotor (10, 11, 12, 18) und eingangsseitigen Aggregaten des Schiffsnetzes (17) andererseits angeordnet ist,
und einer Steuervorrichtung (23, 24),
mittels der in Abhängigkeit von Betriebsdaten jeder Brennkraftmaschine (2, 3, 4), jedes elektrischen Generators (5, 6, 7), jedes Elektromotors (10, 11, 12, 18) und/oder jedes Verbrennungsmotors, jedes Schiffspropellers (13, 14, 15, 19), der eingangsseitigen Aggregate des Schiffsnetzes (17) und jeder Energieverteilereinheit (8, 9) über Steuersignale jede Brennkraftmaschine (2, 3, 4), jeder elektrische Generator (5, 6, 7), jeder Elektromotor (10, 11, 12, 18) und/oder jeder Verbrennungsmotor, jeder Schiffspropeller (13, 14, 15, 19), die eingangsseitigen Aggregate des Schiffsnetzes (17) und jede Energieverteilereinheit (8, 9) steuerbar sind, wobei die Steuervorrichtung (23, 24) eine Steuereinheit (23) und eine Diagnoseeinheit (24) aufweist, in der die übermittelten Betriebsdaten und die von der Steuereinheit (23) ausgegebenen Steuersignale erfassbar und in einem Speichermedium abspeicherbar sind, und die über Internet und/oder geeignete Datenwege fernzugriffsfähig ist, **dadurch gekennzeichnet, daß** der zumindest eine Schiffspropeller (13, 14, 15, 19) mittels der Steuervorrichtung (23, 24) verstellbare Propellerflügel aufweist, daß der Diagnoseeinheit (24) eine Auswerteeinheit zugeordnet ist, mittels der unter Berücksichtigung der erfaßten Betriebsdaten und Steuersignale und eines aktuellen Anforderungsprofils an jede Brennkraftmaschine (2, 3, 4) ein optimierter Betriebsablauf für jede Brennkraftmaschine (2, 3, 4) errechenbar ist, und mittels der unter Berücksichtigung der erfassten Betriebsdaten und Steuersignale und eines aktuellen Anforderungsprofils ein optimierter Betriebsablauf für jeden Schiffspropeller (13, 14, 15, 19) errechenbar ist.

2. Energieversorgungs- und Betriebsanlage für Schiffe und Offshore-Einheiten nach Anspruch 1, bei der mittels der Auswerteeinheit unter Berücksichtigung der erfassten Betriebsdaten und Steuersignale und eines aktuellen Anforderungsprofils an jeden elektrischen Generator (5, 6, 7) und/oder jeden Elektromotor (10, 11, 12, 18) und/oder jeden Verbrennungsmotor und/oder die eingangsseitigen Aggregate des Schiffsnetzes (17) und/oder jede Energieverteilereinheit (8, 9) ein optimierter Betriebsablauf für jeden elektrischen Generator (5, 6, 7) und/oder jeden Elektromotor (10, 11, 12, 18) und/oder jeden Verbrennungsmotor und/oder die eingangsseitigen Aggregate des Schiffsnetzes (17) und/oder jede Energieverteilereinheit (8, 9) errechenbar ist.

3. Energieversorgungs- und Betriebsanlage für Schiffe und Offshore-Einheiten nach Anspruch 1 oder 2, mit weiteren Verbraucheraggregaten (26, 27, 28), z.B. Klimaaggregaten (26), Abwasseraggregaten (27), die an das Schiffsnetz (17) angeschlossen und mittels des Schiffsnetzes (17) mit elektrischer Energie versorgbar sind, deren Betriebsdaten mittels der Steuervorrichtung (23, 24) erfassbar und die mittels der Steuervorrichtung (23, 24) steuerbar sind, und deren erfasste Betriebsdaten und Steuersignale bei der Errechnung eines optimierten Betriebsablaufs für jede Brennkraftmaschine (2, 3, 4) und/oder jeden elektrischen Generator (5, 6, 7) und/oder jeden Elektromotor (10, 11, 12, 18) und/oder jeden Verbrennungsmotor und/oder jeden Schiffspropeller (13, 14, 15, 19) und/oder die eingangsseitigen Aggregate des Schiffsnetzes (17) und/oder jede Energieverteilereinheit (8, 9) berücksichtigbar ist.

4. Energieversorgungs- und Betriebsanlage für Schiffe und Offshore-Einheiten nach Anspruch 3, bei der mittels der der Diagnoseeinheit (24) zugeordneten Auswerteeinheit unter Berücksichtigung der erfassten Betriebsdaten und Steuersignale und zumindest eines aktuellen Anforderungsprofils an jedes weitere Verbraucheraggregat (26, 27, 28) optimierte Betriebsabläufe für jedes weitere Verbraucheraggregat (26, 27, 28) errechenbar sind.

5. Energieversorgungs- und Betriebsanlage für Schiffe und Offshore-Einheiten nach einem der Ansprüche 1 bis 4, deren Diagnoseeinheit (24) als Industriecomputer ausgebildet ist, der in die schiffsseitige Steuervorrichtung (23, 24) integriert ist, mittels dem die die Betriebsdaten und die Steuersignale erfassende und abspeichernde Software autonom betreibbar ist, der zum Empfang der Betriebsdaten und Steuersignale über eine Ethernet-Verbindung an die Steuereinheit (23) angeschlossen ist, und mittels dem sowohl die abgespeicherten als auch aktuelle Betriebsdaten und Steuersignale über das Internet mittels einer Website-basierten Schnittstelle und/oder mittels einer direkten Datenbankverbindung fernzugriffsfähig sind.

6. Energieversorgungs- und Betriebsanlage für Schiffe und Offshore-Einheiten nach einem der Ansprüche 1 bis 5, deren Diagnoseeinheit (24) steuereinheitsseitig als reine Empfangseinheit ausgebildet ist.

7. Energieversorgungs- und Betriebsanlage für Schiffe und Offshore-Einheiten nach einem der Ansprüche 1 bis 5, deren Diagnoseeinheit (24) steuereinheitsseitig sowohl als Empfangs- als auch als Ausgabeeinheit ausgebildet ist.

8. Energieversorgungs- und Betriebsanlage für Schiffe und Offshore-Einheiten nach einem der Ansprüche 1 bis 7, deren Diagnoseeinheit (24) durch einen Industriecomputer, vorzugsweise einen SIMATIC IPC 427C Microbox-Computer ausgebildet ist.

9. Energieversorgungs- und Betriebsanlage für Schiffe und Offshore-Einheiten nach einem der Ansprüche 1 bis 8, in deren Diagnoseeinheit (24) weitere Parameter, z.B. Temperaturverläufe in Maschinen und/oder Kühlräumen, Betriebszustände von Kühlwasseranlagen, die Geschwindigkeit und/oder die geographische Position des Schiffes bzw. der Offshore-Einheit od.dgl. abspeicherbar sind.

## Claims

1. Power supply and operating system for ships and offshore units,
having at least one internal combustion engine (2, 3, 4),
having at least one electric generator (5, 6, 7), wherein each internal combustion engine (2, 3, 4) is connected to an electric generator (5, 6, 7),
having at least one electric motor (10, 11, 12, 18),
which can be supplied with electrical energy by the at least one electric generator (5, 6, 7),
and/or having at least one combustion engine,
wherein by means of the at least one electric motor (10, 11, 12, 18) and/or the at least one combustion engine, at least one ship propeller (13, 14, 15, 19) can be driven, having a ship network (17),
which can be supplied with electrical energy by means of the at least one electric generator (5, 6, 7),
having at least one power distributor unit (8, 9),
which is arranged between the at least one electric generator (5, 6, 7), on the one hand, and possibly the at least one electric motor (10, 11, 12, 18) and input-side units of the ship network (17), on the other,
and having a control device (23, 24),
by means of which as a function of operating data of each internal combustion engine (2, 3, 4), of each electric generator (5, 6, 7), of each electric motor (10, 11, 12, 18) and/or of each combustion engine, of each ship propeller (13, 14, 15, 19), of the input-side units of the ship network (17) and of each energy distributor unit (8, 9), control signals can be used to control each internal combustion engine (2, 3, 4), each electric generator (5, 6, 7), each electric motor (10, 11, 12, 18) and/or each combustion engine, each ship propeller (13, 14, 15, 19), the input-side units of the ship network (17) and each power distributor unit (8, 9), wherein the control device (23, 24) has a control unit (23) and a diagnostic unit (24), in which the transmitted operating data and the control signals output by the control unit (23) can be detected and saved in a storage medium, and which can be remotely accessed via the internet and/or suitable data paths, **characterized in that** the at least one ship propeller (13, 14, 15, 19) has propeller blades that can be adjusted by means of the control device (23, 24), **in that** the diagnostic unit (24) is assigned an evaluation unit, by means of which an optimized operating procedure can be calculated for each internal combustion engine (2, 3, 4) taking into account the detected operating data and control signals and a current requirement profile for each internal combustion engine (2, 3, 4), and by means of which an optimized operating procedure can be calculated for each ship propeller (13, 14, 15, 19) taking into account the detected operating data and control signals and a current requirement profile.

2. Power supply and operating system for ships and offshore units according to Claim 1, in which an optimized operating procedure can be calculated for each electric generator (5, 6, 7) and/or each electric motor (10, 11, 12, 18) and/or each combustion engine and/or the input-side units of the ship network (17) and/or each power distributor unit (8, 9) by means of the evaluation unit taking into account the detected operating data and control signals and a current requirement profile for each electric generator (5, 6, 7), and/or each electric motor (10, 11, 12, 18) and/or each combustion engine and/or the input-side units of the ship network (17) and/or each power distributor unit (8, 9).

3. Power supply and operating system for ships and offshore units according to Claim 1 or 2, having further consumer units (26, 27, 28), e.g. air-conditioning units (26), sewage units (27), which are connected to the ship network (17) and can be supplied with electrical energy by means of the ship network (17), whose operating data can be detected by means of the control device (23, 24), and which can be controlled by means of the control device (23, 24), and whose detected operating data and control signals can be taken into account when calculating an optimized operating procedure for each internal combustion engine (2, 3, 4) and/or each electric generator (5, 6, 7) and/or each electric motor (10, 11, 12, 18) and/or each combustion engine and/or each ship propeller (13, 14, 15, 19) and/or the input-side units of the ship network (17) and/or each power distributor unit (8, 9).

4. Power supply and operating system for ships and offshore units according to Claim 3, in which optimized operating procedures can be calculated for each further consumer unit (26, 27, 28) by means of the evaluation unit assigned to the diagnostic unit (24) taking into account the detected operating data and control signals and at least one current requirement profile for each further consumer unit (26, 27, 28).

5. Power supply and operating system for ships and offshore units according to one of Claims 1 to 4, whose diagnostic unit (24) is designed as an industrial computer, which is integrated into the ship-side control device (23, 24), by means of which computer the software detecting and storing the operating data and control signals can be operated autonomously, which computer is connected to the control unit (23) via an Ethernet connection to receive the operating data and control signals, and by means of which computer both the stored and current operating data and control signals can be remotely accessed via the internet by means of a website-based interface and/or by means of a direct database connection.

6. Power supply and operating system for ships and offshore units according to one of Claims 1 to 5, whose diagnostic unit (24) is designed as a pure receiving unit on the control unit side.

7. Power supply and operating system for ships and offshore units according to one of Claims 1 to 5, whose diagnostic unit (24) is designed both as a receiving and output unit on the control unit side.

8. Power supply and operating system for ships and offshore units according to one of Claims 1 to 7, whose diagnostic unit (24) is formed by an industrial computer, preferably a SIMATIC IPC 427C microbox computer.

9. Power supply and operating system for ships and offshore units according to one of Claims 1 to 8, in whose diagnostic unit (24) further parameters, such as temperature profiles in machines and/or cold rooms, operating states of cooling water systems, the speed and/or geographical position of the ship or offshore unit or the like can be stored.

## Revendications

1. Installation d'alimentation en énergie et d'exploitation pour navires et unités en mer,
avec au moins un moteur à combustion (2, 3, 4),
au moins un générateur électrique (5, 6, 7), sachant que chaque moteur à combustion (2, 3, 4) est raccordé à un générateur électrique (5, 6, 7),
au moins un moteur électrique (10, 11, 12, 18),
qui peut être alimenté en énergie électrique par au moins un générateur électrique (5, 6, 7),
et/ou au moins un moteur à combustion interne,
sachant qu'au moins une hélice de navire (13, 14, 15, 19) peut être entraînée au moyen d'au moins un moteur électrique (10, 11, 12, 18) et/ou au moins d'un moteur à combustion interne,
un réseau de navire (17),
qui peut être alimenté en énergie électrique au moyen d'au moins un générateur électrique (5, 6, 7),
au moins une unité de distribution d'énergie (8, 9),
qui est disposée entre au moins un générateur électrique (5, 6, 7) d'une part et le cas échéant au moins un moteur électrique (10, 11, 12, 18) et des groupes côté entrée du réseau de navire (17) d'autre part,
et un dispositif de commande (23, 24),
au moyen duquel chaque moteur à combustion (2, 3, 4), chaque générateur électrique (5, 6, 7), chaque moteur électrique (10, 11, 12, 18) et/ou chaque moteur à combustion interne, chaque hélice de navire (13, 14, 15, 19), les groupes ,côté entrée du réseau de navire (17) et chaque unité de distribution d'énergie (8, 9) peuvent être commandés par des signaux de commande en fonction des données d'exploitation de chaque moteur à combustion (2, 3, 4), de chaque générateur électrique (5, 6, 7), de chaque moteur électrique (10, 11, 12, 18) et/ou de chaque moteur à combustion interne, de chaque hélice de navire (13, 14, 15, 19), des groupes côté entrée du réseau de navire (17) et de chaque unité de distribution d'énergie (8, 9), sachant que le dispositif de commande (23, 24) comporte une unité de commande (23) et une unité de diagnostic (24), dans laquelle les données d'exploitation transmises et les signaux de commande émis par l'unité de commande (23) peuvent être saisis et peuvent être mémorisés dans un moyen de mémorisation et qui peut être accessible à distance par Internet et/ou des chemins de données appropriées, **caractérisée en ce qu'**au moins une hélice de navire (13, 14, 15, 19) comporte des pales d'hélice réglables au moyen du dispositif de commande (23, 24), **en ce qu'**une unité d'évaluation est attribuée à l'unité de diagnostic (24) au moyen de laquelle un cycle d'exploitation optimisé pour chaque moteur à combustion (2, 3, 4) peut être calculé en tenant compte des données d'exploitation et des signaux de commande saisis et d'un profil d'exigences réel sur chaque moteur à combustion (2, 3, 4) et au moyen de laquelle un cycle d'exploitation optimisé pour chaque hélice de navire (13, 14, 15, 19) peut être calculé en tenant compte des données d'exploitation et des signaux de commande saisis et d'un profil d'exigences réel.

2. Installation d'alimentation en énergie et d'exploitation pour navires et unités en mer selon la revendication 1, pour lequel un cycle d'exploitation optimisé peut être calculé pour chaque générateur électrique (5, 6, 7) et/ou chaque moteur électrique (10, 11, 12, 18) et/ou chaque moteur à combustion interne et/ou les groupes côté entrée du réseau de navire (17) et/ou chaque unité de distribution d'énergie (8, 9) au moyen de l'unité d'évaluation en tenant compte des données d'exploitation et des signaux de commande saisis et d'un profil d'exigences réel sur chaque générateur électrique (5, 6, 7) et/ou chaque moteur électrique (10, 11, 12, 18) et/ou chaque moteur à combustion interne et/ou les groupes côté entrée du réseau de navire (17) et/ou chaque unité de distribution d'énergie (8, 9).

3. Installation d'alimentation en énergie et d'exploitation pour navires et unités en mer selon la revendication 1 ou 2, avec d'autres groupes consommateurs (26, 27, 28), par ex. : climatiseurs (26), ensembles pour eaux usées (27) qui sont raccordés au réseau de navire (17) et peuvent être alimentés en énergie électrique au moyen du réseau de navire (17), dont les données d'exploitation peuvent être saisies au moyen du dispositif de commande (23, 24) et qui peuvent être pilotés au moyen du dispositif de commande (23, 24) et dont les données d'exploitation et signaux de commande saisis peuvent être pris en considération lors du calcul d'un cycle d'exploitation optimisé pour chaque moteur à combustion (2, 3, 4) et/ou chaque générateur électrique (5, 6, 7) et/ou chaque moteur électrique (10, 11, 12, 18) et/ou chaque moteur à combustion interne et/ou chaque hélice de navire (13, 14, 15, 19) et/ou les groupes côté entrée du réseau de navire (17) et/ou chaque unité de distribution d'énergie (8, 9).

4. Installation d'alimentation en énergie et d'exploitation pour navires et unités en mer selon la revendication 3, pour laquelle des cycles d'exploitation optimisés pour chaque autre groupe de consommateurs (26, 27, 28) peuvent être calculés au moyen de l'unité d'évaluation attribuée à l'unité de diagnostic (24) en tenant compte des données d'exploitation et des signaux de commande saisis et au moins d'un profil d'exigences réel sur chaque autre groupe de consommateurs (26, 27, 28).

5. Installation d'alimentation en énergie et d'exploitation pour navires et unités en mer selon l'une quelconque des revendications 1 à 4, dont l'unité de diagnostic (24) est constituée sous la forme d'un ordinateur industriel, qui est intégré dans le dispositif de commande embarqué sur le navire (23, 24), au moyen duquel le logiciel saisissant et mémorisant les données d'exploitation et les signaux de commande peut être exploité de façon autonome, qui est raccordé par le biais d'une liaison Ethernet à l'unité de commande (23) pour la réception des données d'exploitation et des signaux de commande et au moyen duquel les données d'exploitation et signaux de commande tant mémorisés que réels peuvent être accessibles à distance par le biais d'Internet au moyen d'une interface basée sur site et/ou au moyen d'une liaison directe de banque de données.

6. Installation d'alimentation en énergie et d'exploitation pour navires et unités en mer selon l'une quelconque des revendications 1 à 5, dont l'unité de diagnostic (24) est constituée eu égard à l'unité de commande sous la forme d'une unité de réception pure.

7. Installation d'alimentation en énergie et d'exploitation pour navires et unités en mer selon l'une quelconque des revendications 1 à 5, dont l'unité de diagnostic (24) est constituée eu égard à l'unité de commande tant sous la forme d'une unité de réception que d'une unité d'édition.

8. Installation d'alimentation en énergie et d'exploitation pour navires et unités en mer selon l'une quelconque des revendications 1 à 7, dont l'unité de diagnostic (24) est constituée par un ordinateur industriel, de préférence un ordinateur SIMATIC IPC 427C Microbox.

9. Installation d'alimentation en énergie et d'exploitation pour navires et unités en mer selon l'une quelconque des revendications 1 à 8, dans l'unité de diagnostic (24) de laquelle d'autres paramètres, par ex. : courbes de températures dans les machines et/ou compartiments réfrigérés, états d'exploitation des installations d'eau de refroidissement, la vitesse et/ou la position géographique du navire ou de l'unité en mer ou de tout ensemble analogue, peuvent être mémorisés.
